# EUROPEAN PATENT SPECIFICATION

(11) **EP 3 506 383 B1**
(45) Date of publication and mention of the grant of the patent: **12.02.2020**
(21) Application number: 17210814.4
(22) Date of filing: 28.12.2017
(51) Int. Cl.: H01M 2/10, H01M 2/20, H01M 2/30, H01M 10/6553, H01M 2/34

(54) **BATTERY MODULE**
BATTERIEMODUL
MODULE DE BATTERIE

(43) Date of publication of application: 03.07.2019
(73) Proprietor: Samsung SDI Co., Ltd., Yongin-si, Gyeonggi-do 17084 (KR)
(72) Inventor: Golubkov, Andrej, 8010 Graz (AT)
(74) Representative: Gulde & Partner

(56) References cited:
- EP-A1- 2 482 365
- WO-A1-2012/096844
- US-A1- 2015 162 578

## Description

### Field of the Invention

The present invention relates to a battery module, and particularly to a battery module comprising a design that is configured for preventing thermal runaway propagation.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. The battery management functions can then be at least partially realized on either module or submodule level and thus interchangeability can be improved. One or more battery modules are mechanically and electrically integrated, equipped with a thermal management system and set up for communication with one or more electrical consumers in order to form a battery system.

The mechanical integration of a battery system requires appropriate mechanical connection of the individual components, e.g. of battery submodules among themselves and with structures of a system providing the electrical consumers, e.g. a vehicle. These connections must be designed to remain functional and safe during the average service life of the battery system and under the stresses provided during use of the consumers. Further, installation space and interchangeability requirements must be met, especially in mobile applications.

Mechanical integration of battery modules can be achieved by providing a carrier plate, e.g. a ground plate, and by positioning individual battery cells or submodules thereon. Fixing the battery cells or submodules can be achieved by fitted depressions in the carrier plate, by mechanical interconnectors such as bolts or screws or by confining the cells or submodules. Confinement can be achieved by fastening side plates to lateral sides of the carrier plate and/or by providing a further carrier plate atop and fixing it to the carrier plate and/or side plates. Thus, multilevel battery modules can be constructed, wherein the carrier plates and/or side plates may contain coolant ducts for providing cooling of the cells or submodules.

Mechanical integration of battery submodules can be achieved by providing mechanically reinforced electrical connectors or by fastening the battery cells onto carrier beams or struts in addition to the electrical connectors. Additionally or alternatively the submodules can be arranged in individual casings covering some or all of the surfaces of a battery submodule and arranged into a battery module, e.g. onto a carrier plate, within these individual casings.

To provide electrical integration of a battery system either pluralities of cells connected in parallel are connected in series (*XpYs*) or pluralities of cells connected in series are connected in parallel (*XsYp*)*.* Therein pluralities of cells connected in series and/or in parallel may be bundled to battery submodules. *XsYp* type modules can generate high voltages but the voltage level of each cell hast to be controlled individually and thus wiring complexity is increased. In *XpYs* type modules the voltage levels of the cells connected in parallel are automatically balanced. Thus the voltage can be controlled on cell or submodule level and wiring complexity is reduced. For cells or submodules connected in parallel the capacitance of the cells add up and thus *XpYs* type designs are mostly used with low capacitance cells. For meeting the dynamic power demands of various electrical consumers connected to the battery system, static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system for processing this information.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable battery deteriorates and its life-span is shortened. Thus, cooling devices for effectively emitting/discharging/dissipating heat from the battery cells are required.

An example of such abnormal operation condition is a thermal runaway of a battery cell that may be entered by strongly overheated or overcharged Lithium ion cell. The critical temperature for transiting into thermal runaway is typically above 150°C and may be exceeded due to a local failure, as an internal short circuit of a cell, heating from a bad electrical contact or a short circuit to an adjacent cell. A thermal runaway is a self-accelerating chemical process inside the cell, which produces high amounts of heat and gas, until all available material is exhausted and during which the failed cell may heat up to cell temperatures higher than 700°C and may eject large quantities of hot gas into the system.

The failing cell can transfer large amounts of heat to adjacent cells during thermal runaway. Neighboring cells might receive heat due to direct contact to a failing cell, by heat conduction via side or base plate and/or electrical connectors. Additionally, convectional heat transport may occur within the battery system due to the ejected hot gas. Thus, non-failed adjacent cells are prone to transit into thermal runaway such that thermal runaway might propagate through the battery system, eventually resulting in battery fire and loss of an electric vehicle.

According to the prior art, elements that thermally short the battery cells, such as busbars, base plates or covers may be provided with active cooling means, such as integrated coolant tubes, or with passive cooling means, such as integrated portions of material with low thermal conductivity. Further, a battery system may be provided with means for discharging, cooling or redirecting the hot gases emitted from a failing cell. Active cooling means must be controlled and supervised and may pose the risk of coolant leaking into the battery system. The known passive cooling means are usually expensive as they require the replacement of standard components, such as aluminum busbars, with thermally optimized components.

WO 2012/096844 A1 discloses a battery module with a modular frame comprising a plurality of slots for receiving prismatic battery cells. The slots are arranged such that rows of cells are formed that extend in parallel with the longitudinal direction of the battery module. An air cooling member is inserted between interior walls and of the modular frame via an aperture. EP 2 482 365 A1 discloses disclose a battery module 200 that comprises a plurality of battery cells 20 which are stacked along a first direction, wherein the battery cells 20 are alternately offset in a second direction that is perpendicular to the first direction.

It is an object of the present invention to overcome or reduce at least some of the drawbacks of the prior art and to provide a battery module with an optimized protection against propagation of heat and thus a thermal runaway through the battery module.

### Description of the Invention

One or more of the drawbacks of the prior art could be avoided or at least reduced by means of the present invention. In particular, according to a first aspect of the invention a battery module is provided, comprising a plurality of rows of battery cells, a plurality of first busbars and at least one second busbar. Therein, each battery cell comprises a prismatic battery case with a bottom surface, a first pair of wide side surfaces and a second pair of narrow side surfaces. Further, the first and the at least one second busbars are each configured for electrically connecting at least two battery cells. Within a row, preferably within each row, adjacent battery cells face each other via their narrow side surfaces. In other words, the rows are formed by aligned battery cells placed next to each other with a narrow side of one battery cell being in close contact with a narrow side surface of an adjacent battery cell.

According to the invention, adjacent battery cells of adjacent rows, i.e. cells within different rows that are facing each other, face each other via their wide side surfaces. In other words, multiple rows of battery cells are placed next to each other, wherein wide side surfaces of adjacent cells in adjacent rows are in close contact to each other. According to the invention, adjacent battery cells within a row, preferably within each row, are electrically connected in series via one of the plurality of first busbars. In other words, the cells within a row are electrically connected along the alignment direction of the rows. Further, distinct rows, preferably pairs of distinct rows, are electrically connected in series via at least one second busbar. In other words, battery cells of distinct rows, i.e. of adjacent rows or distant rows, preferably outermost battery cells of adjacent rows, are electrically connected in series via the at least one second busbar. Herein, a battery module may also refer to a battery submodule.

According to the present invention, the battery cells of adjacent rows of battery cells are shifted against each other in a direction parallel or antiparallel to a length direction of the battery module. In other words, the rows of battery cells are shifted against each other in plane with the wide module side surfaces. Thus the battery cells of the battery module are arranged in an imbricate manner. Therein the wide cell side surfaces of most of the battery cells of each of the rows (except the outermost cells of the rows) do not contact only one wide side surface of an adjacent cell of an adjacent row, but contact two wide side surfaces of two adjacent cells of an adjacent row of battery cells. Thus the number of cells adjacent to a wide side surface of any battery cell is increased to a minimum of two instead of a minimum of one. Thus the heat from any cell is distributed to a larger number of cells. This greatly reduces the chance that any adjacent cell is heated above 150°C. Thus the chance of thermal runaway propagation from a failed cell to any adjacent neighboring cell is reduced.

Within a battery module there are usually three main heat conductions paths between a pair of adjacent cells. The first path is through the contact area of the wide side surfaces of the cases of the adjacent cells. The second path is through the electric connectors, particularly the busbars, which usually consist of thermally highly conductive material. And the third path is through the cooling plate or any other additional mechanical fixture of the battery module. Therein, the most significant heat conduction path between a pair of adjacent cells usually is the first heat path that is followed in significance by the second heat path. In prior art battery modules, first and second heat path are unidirectional as adjacent battery cells contacting each other via wide side surfaces are at the same time electrically connected via busbars.

According to the present invention, the first and second heat path are separated, as predominantly battery cells that contact each other via narrow side surfaces are electrically connected via busbars. In other words, the first and second heat paths do not connect a certain cell to a same adjacent cell but to at least two different adjacent cells. Thus the heat from a failed cell is distributed more evenly and to a larger number of cells. This greatly reduces the chance that any adjacent cell is heated above 150°C. Thus the chance of thermal runaway propagation from a failed cell to any adjacent neighboring cell is reduced.

According to a preferred embodiment of the present invention, the rows of battery cells extend in parallel to a length direction of the battery module. Therein, the battery module preferably has a cuboid shape with a base surface and an opposite top surface, a first pair of opposing wide module side surfaces and a second pair of opposing narrow module side surfaces. Preferably, the wide module side surfaces extend in the length direction of the battery module. In other words, a length of an edge at which the module base surface and one of the wide module side surfaces are connected to each other is longer than that of an edge at which the module base surface and one of the narrow module side surfaces are connected to each other. Hence, according to the present invention, the cells of each row are oriented such that the wide cell side surface of a cell, preferably of each cell, is in-plane with the wide module side surfaces, i.e. the length direction, of the battery module. By predominantly electrically connecting the cells within the rows, cells are connected that do not have large contact areas of wide cell side surfaces and hence heat propagation is reduced.

According to a preferred embodiment of the battery module, an offset between battery cells of adjacent rows, i.e. of rows shifted to each other in the length direction of the module, corresponds to half of the extension of a wide cell side surface in a length direction of the battery module. Therein, the offset refers to the distance between similar narrow side surfaces of adjacent cells of adjacent rows in (or against) the length direction of the battery module. Shifting the cells about an offset of half of the extension of a wide cell side surface in a length direction of the battery module splits the first heat path from a battery cell to adjacent cells of an adjacent row in two equal halves. Hence, heat is most uniformly distributed in the battery module and hence chance of thermal runaway propagation from a failed cell to any adjacent neighboring cell is reduced. However, the present invention can also be realized with other offsets between battery cells of adjacent rows, e.g. corresponding to 10%, 20%, 30%, 40%, 50%, 60%, 70%, 80% or 90% of the extension of a wide cell side surface in a length direction of the battery module, and still improve heat distribution over the prior art.

As adjacent rows of battery cells are shifted about an offset in the length direction of the battery module, the outermost narrow side surfaces of outermost cells of adjacent rows are not aligned. For still achieving a regular and compact shape of the battery module as a whole, an offset between outermost battery cells of adjacent rows is preferably filled with a first spacer. In other words, a first spacer fills the gap between the outermost narrow side surface of the outermost battery cell of a first row and the outermost narrow side surface of the outermost battery cell of a second row adjacent to the first row. Preferably, the first spacers have the same height and the same extension of their narrow side surfaces as the battery cells, wherein the extension of the wide side surfaces of the first spacers corresponds to the offset of battery cells of adjacent rows. Hence, if an offset between battery cells of adjacent rows corresponds to half of the extension of a wide cell side surface in a length direction of the battery module, the extension of a first spacer wide side surface in a length direction of the battery module corresponds to half of the extension of a wide cell side surface in a length direction of the battery module. Thus, only one first spacer in each row is required. Further preferred, each row comprises exactly one first spacer. Therein, first spacers of adjacent rows are positioned at opposing module narrow side surfaces. Preferably, the first spacers are from a lightweight material that is configured to absorb heat from adjacent battery cells.

According to a further preferred embodiment of the battery module, the polarities of outermost battery cells of adjacent rows are opposite. In other words, if the outermost terminal of an outermost cell in a first row is of a first polarity, the outermost terminal of an outermost cell in a second row adjacent to the first row is of a second polarity opposite to the first polarity. This allows for electrically connecting adjacent rows, i.e. outermost cells of adjacent rows, in series by using rather short second busbars. However, the battery module of the present invention could also be realized with the polarities of outermost battery cells of adjacent rows being the same. This would require longer second busbars but further separate heat paths.

In a simple embodiment of the battery module of the present invention, all battery cells of the module are connected in series, i.e. in an Xs1p configuration. Therein, the first busbars are preferably configured to electrically connect solely adjacent cells within each row in series, and preferably comprise a simple rectangular shape. Further preferred, the second busbars are configured to electrically connect distinct rows, i.e. cells of distinct rows, and preferably outermost cells of adjacent rows in series. Thus, the second busbars preferably comprise a simple L-shape and are configured to bridge an offset of outermost cells of adjacent rows.

In other preferred embodiments the battery module of the present invention is constructed in any other XsYp configuration. Therein, the first busbars are further configured to electrically connect battery cells of distant rows in parallel. Particularly preferred, the first busbars are configured to be thermally isolated from battery cells of rows that are in between the distant rows that are electrically connected in parallel by the first busbars. Also preferred, a first busbar comprises at least one perforation that is configured to be aligned with a vent member of battery cells of rows that are in between the distant rows electrically connected in parallel. Further preferred, the at least one second busbar is configured to electrically connect distinct rows, i.e. battery cells of distinct rows, and preferably outermost battery cells of distant rows, in parallel. Therein, the first heat path and the second heat path are further separated.

Further preferred, the battery cells of the battery module of the present invention are connected in series and/or in parallel between a first module terminal and a second module terminal. Therein, each of the first and second module terminals preferably comprises a pole section that is configured to be connected to an external load circuit and a contact section that is configured to electrically connect battery cells of distinct, i.e. adjacent or distant, rows in parallel. This design of the first and second module terminals is preferably used in battery modules with XsYp designs. Therein, the amount of battery cells that are electrically connected in parallel by one, preferably by each, of the first busbars and each of the contact sections of the first and second module terminal is preferably equal and corresponds further preferred to the amount of cells connected in parallel in the module, i.e. to Y. The amount of cells electrically connected in parallel by the at least one second busbar may be also equal to the number of cells electrically connected in parallel by each first busbar or the amount of cells electrically connected in parallel by the at least one second busbar may be double the number of cells electrically connected in parallel by each first busbar. Preferably, the contact sections of at least one of the first and second module terminal is further configured to bridge the extension of a first spacer by extending at least partially in the module's length direction.

According to a further preferred embodiment, the battery module of the present invention comprises at least one pair of second spacers that are adjacent to and aligned with the wide and/or narrow module side surfaces. These second spacers increase the shock protection of the battery system and are preferably configured to absorb heat from the cells. The battery module may further comprise a ribbon, e.g. a elastically ribbon or a metal ribbon with adjustable length, which extends around the battery module, preferably around the wide module side surfaces as well as the narrow module side surfaces. The ribbon is preferably configured to compress the battery module. In this embodiment, the at least one pair of second spacers may further be configured to uniformly distribute the pressure exerted by the ribbon onto the battery cells of the module. Alternatively the ribbon extends around the module base and top surface and one of the pairs of wide and narrow module side surfaces.

Further aspects of the present invention will be apparent from the dependent claims, the attached drawings and/or the following description of the attached drawings.

### Detailed Description of the Drawings

Features will become apparent to those of ordinary skill in the art by describing exemplary embodiments in detail with reference to the attached drawings in which:
- Fig. 1: illustrates a perspective view of a battery cell according to an embodiment;
- Fig. 2: illustrates a cross section of a battery cell according to an embodiment;
- Fig. 3: illustrates a schematic perspective view of a 12s1p battery module according to the prior art;
- Fig. 4: illustrates a schematic perspective view of a 12s1p battery module according to a first embodiment;
- Fig. 5: illustrates a schematic perspective view of a 6s2p battery module according to a second embodiment;
- Fig. 6: illustrates a schematic perspective and partially exploded view of the 6s2p battery module according to the second embodiment;
- Fig. 7: illustrates a schematic perspective view of a 6s3p battery module according to a third embodiment; and
- Fig. 8: illustrates a schematic perspective and partially exploded view of the 6s3p battery module according to the third embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention." Although the embodiments herein are described with various specific embodiments, it will be obvious for a person skilled in the art to practice the invention with modifications. All such modifications are deemed to be within the scope of the claims.

As used herein, the terms "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered around the value. In addition, the use of "may" when describing embodiments of the present invention refers to "one or more embodiments of the present invention." Herein, the terms "upper" and "lower" are defined according to the z-axis. For example, the upper cover is positioned at the upper part of the z-axis, whereas the lower cover is positioned at the lower part thereof.

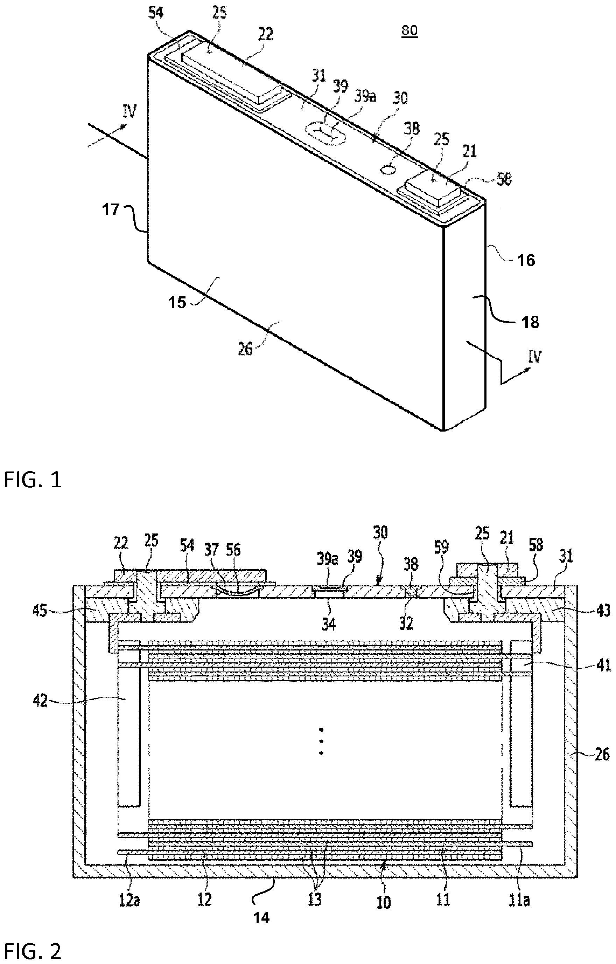

Fig. 1 is a perspective view illustrating a battery cell according to an exemplary embodiment and Fig. 2 is a cross-sectional view taken along the IV-IV line of Fig. 1.

As shown in Figs. 1 and 2, a battery cell 80 according to an embodiment may include an electrode assembly 10, and a case 26 for accommodating the electrode assembly 10, the case 26 containing an electrolyte. The battery cell 80 may also include a cap assembly 30 for sealing an opening of the case 26. The battery cell 80 will be described as a non-limiting example of a lithium ion secondary battery configured to have a prismatic shape.

The electrode assembly 10 may be formed as a jelly roll type of electrode assembly by spirally winding a positive electrode 11 and a negative electrode 12 with a separator 13 therebetween. The positive electrode 11 and the negative electrode 12 may respectively include coated regions of current collectors formed of a thin metal foil, on which an active material may be coated, and may respectively include positive and negative electrode uncoated regions 11a and 12a of the current collectors on which no active material is coated. As a non-limiting example, the coated region of the positive electrode 11 may be formed by coating a base material formed of a metal foil, such as an aluminum foil, with an active material, such as a transition metal oxide or the like. Also, the coated region of the negative electrode 12 may be formed by coating a base material formed of a metal foil, such as a copper or nickel foil, with an active material, such as carbon, graphite, or the like.

The positive electrode uncoated region 11a may be formed on one lateral end of the positive electrode 11 in a longitudinal direction of the positive electrode 11, and the negative electrode uncoated region 12a may be formed on one lateral end of the negative electrode 12 in a longitudinal direction of the negative electrode 12. The positive electrode uncoated region 11a and the negative electrode uncoated region 12a may be on sides that are opposite to each other with respect to the coated regions. Further, the separator 13 may include a plurality of separators, which may be spirally wound after the positive electrode 11, the negative electrode 12, and the separator 13 are alternately situated. The present invention is not limited thereto, and the electrode assembly 10 may be configured to have a structure including a plurality of sheets of the positive electrode 11, the separator 13, and the negative electrode 12 that are repeatedly stacked.

The electrode assembly 10 may be accommodated in the case 26 together with an electrolyte solution. The electrolyte solution may be made of a lithium salt, such as LiPF6 or LiBF4 with an organic solvent, such as EC, PC, DEC, EMC, or EMC. The electrolyte solution may be in a liquid, solid, or gel state. The case 26 may be configured to have a substantially cuboidal shape, and an opening may be formed at one side thereof. The case 26 may be formed of a metal, such as aluminum.

The case 26 may include a bottom surface 14 having a substantially rectangular shape, and may include a pair of first lateral walls, that are wide side surfaces 15, 16, and a pair of second lateral walls, that are narrow side surfaces 17, 18, connected vertically to end portions of the bottom surface 14, respectively, to form a space for accommodating the electrode assembly 10. The first lateral walls 15, 16 may face each other, and the second lateral 17, 18 walls may be positioned to face each other and may be connected to the first lateral walls 15, 16. A length of an edge at which the bottom surface 14 and one of the first lateral walls 15, 16 are connected to each other may be longer than that of an edge at which the bottom surface 14 and one of the second lateral walls 17, 18 are connected to each other. Preferably, adjacent first lateral walls 15, 16 and second lateral walls 17, 18 enclose an angle of 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to the positive electrode 11 and the negative electrode 12, respectively. The cap plate 31 may be configured to have a shape of a plate that may be extended in one direction, and that may be bonded to the opening of the case 26. The cap plate 31 may include an injection hole 32 and a vent hole 34 that communicate with an interior of the cap assembly 30. The injection hole 32 may be configured to allow injection of the electrolyte solution, and a sealing cap 38 may be mounted thereon or therein. Further, a vent member 39 including a notch 39a, which may be opened due to a predetermined pressure may be mounted to or in the vent hole 34.

The positive terminal 21 and the negative terminal 22 may be mounted to protrude upward from the cap plate 31. The positive terminal 21 may be electrically connected to the positive electrode 11 via a current collecting tab 41, and the negative terminal 22 may be electrically connected to the negative electrode 12 via a current collecting tab 42. A terminal connecting member 25 for electrically connecting the positive terminal 21 and the current collecting tab 41 may be mounted between the positive terminal 21 and the current collecting tab 41. The terminal connecting member 25 may be inserted into a hole formed at the positive terminal 21, such that a lower portion thereof may be welded to the current collecting tab 41.

A gasket 59 for sealing may be mounted between the terminal connecting member 25 and the cap plate 31, while being inserted into a hole through which the terminal connecting member 25 may extend. Further, a lower insulating member 43, into which the lower portion of the terminal connecting member 25 may be inserted, may be mounted under the cap plate 31. A connecting plate 58 for electrically connecting the positive terminal 21 and the cap plate 31 may be mounted between the positive terminal 21 and the cap plate 31. The terminal connecting member 25 may be inserted into the connecting plate 58. Accordingly, the cap plate 31 and the case 26 may be positively electrified.

Another terminal connecting member 25, for electrically connecting the negative terminal 22 and the current collecting tab 42 may be installed between the negative terminal 22 and the current collecting tab 42. The terminal connecting member 25 may be inserted into a hole formed at the negative terminal 22, such that an upper portion and a lower portion of the terminal connecting member 25 may be, respectively, welded to the negative terminal 22 and to the current collecting tab 42. A gasket for sealing, which is similar to the gasket 59, may be mounted between the negative terminal 22 and the cap plate 31, while being inserted into the hole through which the terminal connecting member 25 may extend. Further, a lower insulating member 45, which is for insulating the negative terminal 22 and the current collecting tab 42 from the cap plate 31, may be mounted under the cap plate 31.

An upper insulating member 54 for electrically insulating the negative terminal 22 and the cap plate 31 may be mounted between the negative terminal 22 and the cap plate 31. The terminal connecting member 25 may be inserted into a hole formed at the upper insulating member 54. The cap assembly 30 may include a short-circuiting hole 37, and a short-circuiting member 56 that may short-circuit the positive electrode 11 and the negative electrode 12 installed in the short-circuiting hole 37. The short-circuiting member 56 may be between the upper insulating member 54 and the cap plate 31, and the upper insulating member 54 may be configured to have a cutout that may be formed at a position corresponding to the short-circuiting member 56. The short-circuiting member 56 may overlap the negative terminal 22 exposed through the cutout, and may be separately located.

Further, the short-circuiting member 56 may be between the negative terminal 22 and the vent hole 34, and may be located closer to the negative terminal 22 than to the vent hole 34. The short-circuiting member 56 may include a convexly curved portion that curves toward the electrode assembly 10, and may include an edge portion that may be formed at an outside of the curved portion and fixed to the cap plate 31. The short-circuiting member 56 may be deformed to cause a short circuit when an internal pressure of the battery cell 80 rises. In other words, the internal pressure of the battery cell 80 may rise when a gas is generated by an unwanted reaction in the battery cell 80. When the internal pressure of the battery cell 80 is increased to be higher than a level (e.g., a predetermined level), the curved portion may be deformed to be concavely curved toward an opposite direction, thereby causing the short-circuiting member 56 to contact the negative terminal 22 to cause a short-circuit.

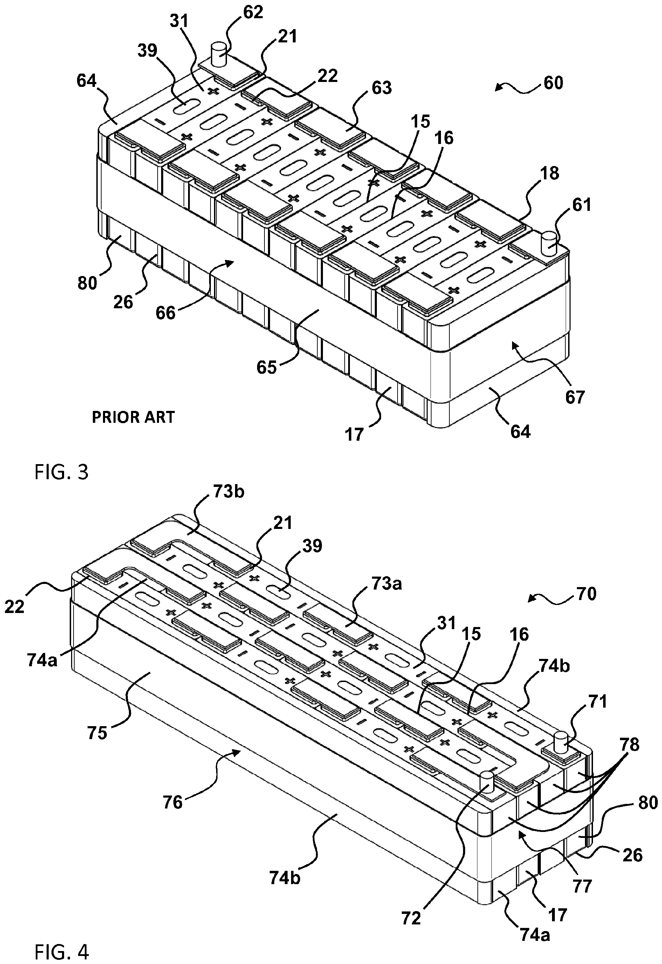

Referring to Figs. 3 to 8, a battery module 60, 70 includes a plurality of prismatic (cuboidal) battery cells 80, each comprising a case 26 and an electrode assembly (not shown) accommodated in the case 26. The case 26 is formed of aluminum and has a substantially cuboidal shape with an opening at its top for inserting the electrode assembly. The opening is closed by a cap plate 31 comprising a vent member 39 placed within a vent opening (not shown). The case 26 has (first) wide side surfaces 15, 16 and (second) narrow side surfaces 17, 18 facing each other, respectively.

Referring to Fig. 3, a battery module 60 according to the prior art comprises twelve prismatic battery cells 80 that are connected in series between a negative first module terminal 61 and a positive second module terminal 62. In other words, the battery module 60 has a 12s1p modification. In the battery module 60 the battery cells 80 are stacked in a stacking direction with their wide side surfaces 15, 16 such that first lateral walls 15, 16 of adjacent battery cells 80 face each other and/or are in close contact with each other. As a result, the battery module 60 comprises a rectangular shape with a wide module side surface 66 extending in the stacking direction and a narrow module side surface 67 extending perpendicular to the stacking direction. One positive and one negative electrode terminal 21 and 22 of each pair of neighboring battery cells 80 are electrically connected through a bus bar 63. Spacers 64 are positioned adjacent to the outward facing wide side surface 15, 16 of the outermost battery cells 80 and hence terminate the battery module 60 in the stacking direction. A ribbon 65 runs around the battery module 60 and compresses the battery cells 80 and the spacers 64 in the stacking direction. In the battery module 60 according to the prior art heat transport between adjacent cells 80 predominantly occurs via the facing wide side surfaces 15, 16 and via the busbars 63. Thus, heat of a failed cell 80 easily propagates though the battery module 60.

Referring to Fig. 4, a battery module 70 according to a first embodiment of the present invention comprises twelve battery cells 80 that are connected in series between a negative first module terminal 71 and a second positive module terminal 72. In other words, the battery module 70 is designed with a 12s1p configuration. The battery module 70 has a pair of wide module side surfaces 76 and a pair of narrow module side surfaces 77, wherein the wide module side surfaces 76 extend in a length direction of the battery module 70. Consequently, the battery module 70 has an elongated cuboid shape that extends into the length direction.

The battery module 70 comprises four rows 78 of battery cells 80, wherein each row 78 comprises three battery cells 80 that are aligned in the length direction of the battery module 70 and face each other via their respective narrow cell side surfaces 17, 18. Therein, a positive terminal 21 of a first battery cell 80 is placed adjacent to a negative terminal 22 of a second battery cell 80 adjacent to the first battery cell 80. Each of the rows 78 of battery cells 80 further comprises a first spacer 74a, wherein the first spacers 74a of adjacent rows 78 are positioned close to opposing narrow module side surfaces 77 of the battery module 70. The first spacers 74 are of identical height as the battery cells 80 and have narrow side surfaces of equal extension as the narrow cell side surfaces 17, 18 and wide side surfaces of half the extension of the wide cell side surfaces 15, 16 in the module's length direction. The polarities of the outermost terminals 21, 22 of the cells 80 of adjacent rows 70 are opposite. Wherein a first row 78 has an outermost terminal of positive polarity 22 connected to the positive module terminal 72, an adjacent cell 80 in adjacent row 78 has an outermost negative terminal 22.

Within each row 78, the adjacent pairs of positive and negative terminals 21, 22 of adjacent cells 80 are each electrically connected via one of a plurality of eight first busbars 73a. The first busbars 73a are aluminum busbars with planar rectangular shape, wherein a length of the first busbars 73a corresponds to a length of two cell terminals 21, 22 and wherein a width of the first busbars 73a corresponds to an extension of a narrow cell side surface 17, 18.

A first positive terminal 21 of an outermost cell 80 of the first row 78 is electrically connected to a positive module terminal 72 that extends over a first spacer 74a positioned adjacent to this outermost cell 80. An opposing outermost cell 80 of the first row that is positioned distant to the positive module terminal 72 comprises an outermost negative cell terminal 22 that is electrically connected to a positive cell terminal 21 of an outermost cell 80 of an adjacent second row 78 via a second busbar 73b. This outermost cell 80 of the second row 78 is positioned with an offset of half the extension of a wide cell side surface 15, 16 in the module's length direction. This offset is filled with a first spacer 74a such that an outermost narrow cell side surface 17 of the outermost cell 80 of the first row and an outermost narrow side surface of the first spacer 74a of the second row 78 are aligned with each other. An opposing outermost cell 80 of the second row 78 that is positioned adjacent to the positive module terminal 72 comprises an outermost negative cell terminal 22 that is electrically connected to a positive cell terminal 21 of an outermost cell 80 of an adjacent third row 78 via a further second busbar 73b. An opposing outermost cell 80 of the third row comprises an outermost negative cell terminal 21 that is electrically connected to a positive cell terminal 21 of an outermost cell 80 of an adjacent fourth row 78 via a further second busbar 73b. An opposing outermost cell 80 of the fourth row comprises an outermost negative cell terminal 21 that is electrically connected to a negative module terminal 71. Here and in the following the rows 78 are counted starting with a first row connected to the positive module terminal 72 towards a last (fourth) row 78 connected to the negative module terminal 71.

Each of the three second busbars 73b comprises an L-shape, with a short leg having an extension that corresponds to the extension of two narrow cell side surfaces 17, 18 in a direction perpendicular to the module's length direction and a long leg having an extension that corresponds to the sum of half the extension of a wide cell side surface 15, 16 in the module's length direction, i.e. the length of a first spacer, and the length of a cell terminal 21.

The battery module 70 of Fig. 4 further comprises a pair of second spacers 74b that are fitted to the wide module side surfaces 76 of the battery module 70 and consists of a lightweight, heat-absorbing and shock-absorbing material. An elastic ribbon 75 extends around the wide and narrow module side surfaces 76, 77 and compresses the battery module 70.

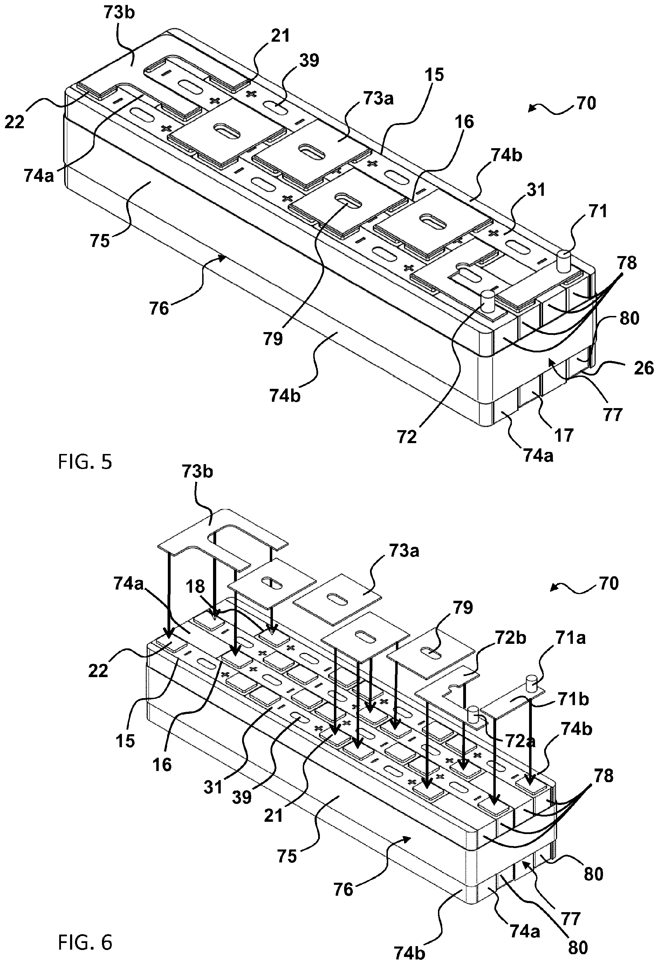

Referring to Figs. 5 and 6, a battery module 70 according to a second embodiment of the invention comprises twelve battery cells 80 that are connected in series and in parallel a in a 6s2p configuration between a negative first module terminal 71 and a second positive module terminal 72. As far as the battery module 70 of the second embodiment is identical to the module 70 of the first embodiment a further description of the identical features is omitted.

The spatial arrangement of the battery cells 80, the first spacers 74a, the second spacers 74b and the ribbon 75 in the module 70 of the second embodiment is identical to the spatial arrangement of these components in the module 70 of the first embodiment. In the module 70 of the second embodiment a different electric routing, i.e. the 6s2p configuration, is realized by another design of the first busbars 73a, the second busbars 73b and the first and second module terminals 71, 72.

Within each row 78 of the module 70 adjacent pairs of positive and negative terminals 21, 22 of adjacent cells 80 are each electrically connected via one of a plurality of aluminum first busbars 73a with planar rectangular shape, the length (in the module's length direction) of which corresponds to the length of two cell terminals 21, 22. However, the width of the first busbars 73a corresponds to the extension of a three narrow cell side surfaces 17, 18. Hence, the first busbars 73a extend over three rows 78 of battery cells 80. As the battery cells 80 of every second row 78 are aligned with each other, the first busbars 73a further connect two pairs of positive and negative terminals 21, 22 of adjacent cells, respectively, in the outer two of these three rows 78. Hence, each first busbar 73a electrically connect two pairs of battery cells 80 of two distant rows 78 in parallel. The battery cell 80 of the middle row 78 in between the cells 80 electrically connected in parallel has no terminals 21, 22 protruding underneath the first busbar 73a. Hence, no electric connection is established between the first busbar 73a and the middle row 78. However, a vent member 39 of the battery cell 80 of the middle row 78 is positioned underneath the first busbar 78. Thus, each first busbar 73a comprises a perforation (through opening) 79 for allowing a hot vent-gas jet of the cell 80 to be emitted in a space above the module 70. As each first busbar 73 connects two pairs of adjacent cells 80 in series, the battery module 70 comprises a total of only four first busbars 73a.

A single second busbar 73b electrically connects distinct rows 78 of battery cells 80, i.e. outermost cells 80 of distinct rows, in series, and at the same time electrically connects other distinct rows 78 of battery cells 80, i.e. outermost cells 80 of other distinct rows, in parallel. The single second busbar 73b has an F-shape with a single leg extending in a direction perpendicular to the length direction of the battery module 70 and two further legs extending in the length direction of the battery module 70. The single leg has a length corresponding to the extension of four narrow cell side surfaces 17, 18 and a width corresponding to the extension of a cell terminal 21, 22 in a length direction of the module 70. Each of the further legs has a length corresponding to the sum of half the extension of a wide cell side surface 15, 16 in the module's length direction, i.e. the length of a first spacer 74a, and the length of a cell terminal 21, 22. Each of the further legs has a width corresponding to the extension of a cell terminal 21, 22 perpendicular to a length direction of the module 70. The second busbar 73b electrically connects the first row 78 in parallel with the third row 78 and electrically connects the first and second row 78 and the third and fourth row 78 in series.

The first and second module terminal 71, 72 of the battery module 70 of the second embodiment each comprises a pole section 71a, 72a that is configured to be connected to an external load circuit and a contact section 71b, 72b that is configured to electrically connect distinct rows 78 of cells 80 in parallel. As shown in Figs. 5 and 6, the pole sections 71a, 72a are configured as metal cylinders set on top of the planar contact sections 71b, 72b.

The contact section 71 b of the first module terminal 71 is a planar rectangular aluminum strip that extends in a direction perpendicular to the module's length direction and has a length that corresponds to the extension of three narrow cell side surfaces 17, 18. The contact section 71b of the first module terminal 71 thus electrically connects in parallel the negative cell terminals 22 of outermost cells 80 of the second and fourth row 78 and extends over the first spacer 74a of the third row 78.

The contact section 72b of the second module terminal 72 is a planar and essentially L-shaped aluminum strip with a first leg extending in the module's length direction and a second leg extending perpendicular to the module's length direction. The first leg has a length that corresponds to the sum of half the extension of a wide cell side surface 15, 16, i.e. the extension of a first spacer 74a, in the module's length direction and the length of a cell terminal 21. The second leg has a length that corresponds to the extension of three narrow cell side surfaces 17, 18. The first leg comprises the second pole section 72a and extends over the first spacer 74a of the first row 78 to the positive terminal 22 of an outermost cell of the first row 78. The second leg extends over an outermost cell 80 of the second row 78 and towards the positive terminal 22 of an outermost cell 80 of the third row 78 and thus electrically connects the first and third row 78 in parallel. The second leg also comprises a semicircular recess configured to be aligned with the vent member 39 of the outermost cell 80 of the second row 78 to allow a hot vent-gas het to be emitted by the vent member 39.

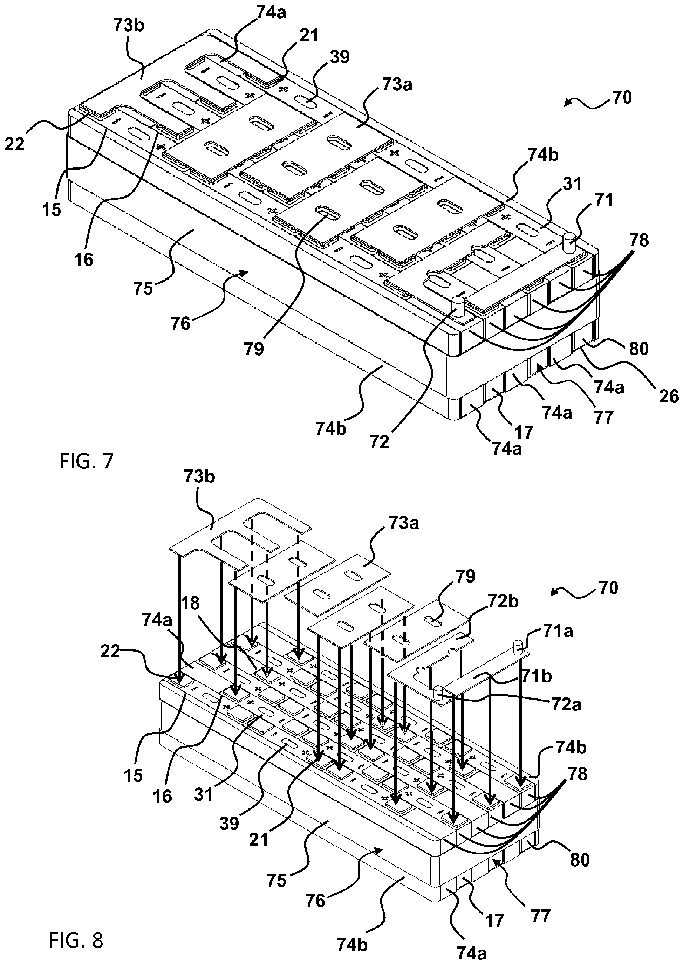

Referring to Figs. 7 and 8, a battery module 70 according to a third embodiment of the invention comprises eighteen battery cells 80 that are connected in series and in parallel in a 6s3p configuration between a negative first module terminal 71 and a second positive module terminal 72. As far as the battery module 70 of the third embodiment is similar to the module 70 of the former embodiments a further description of identical features is omitted.

The arrangement of the battery cells 80, the first spacers 74a, the second spacers 74b and the ribbon 75 in the module 70 of the third embodiment is similar to the arrangement of these components in the module 70 of the second embodiment. The module 70 of the third embodiment differs from that of the second embodiment in that it comprises six rows 78 of battery cells 80, wherein each row 78 comprises three battery cells 80 connected in series.

While the electrical routing within the rows 78 of the battery module 70 according to the third embodiment is essentially equal to the electrical routing within the rows 78 of the battery module 70 of the second embodiment, the electrical routing of cells 80 of distinct rows differs in that cells 80 of three rows 78 are electrically connected in parallel in the battery module 70 according to the third embodiment. This different electric routing, i.e. the 6s3p configuration, is again realized by an amended design of the first busbars 73a, the second busbar 73b and the first and second module terminals 71, 72 based on the second embodiment.

Again within each row 78, adjacent pairs of positive and negative terminals 21, 22 of adjacent cells 80 are each electrically connected via one of a plurality of aluminum first busbars 73a with planar rectangular shape, the length (in the module's length direction) of which corresponds to the length of two cell terminals 21, 22. However, the width of the first busbars 73a corresponds to the extension of five narrow cell side surfaces 17, 18. Hence, the first busbars 73a extend over five rows 78 of battery cells 80. The battery cells 80 of every second row 78 are aligned with each other, and hence the first busbars 73a further connect two triples of positive and negative terminals 21, 22 of adjacent cells in the first, third and fifth rows 78 of module 70. Hence, the first busbars 73a electrically connect battery cells 80 of three distant rows 78 in parallel. The battery cells 80 of the second and fourth row 78 in between the connected cells 80 have no terminals 21, 22 protruding underneath the first busbars 73a and thus no electric connection is established between the first busbar 73a and these rows 78. In the third embodiment, the first busbars 73a further comprise two perforations 79 for allowing vent-gas of the cells 80 of the second and fourth row 78 to be emitted. Again the battery module 70 comprises a total of four first busbars 73a.

A single second busbar 73b electrically connects the first, third and fifth row 78 in parallel and electrically connects the first and second, the third and fourth and the fifth and sixth row 78 in series. The single second busbar 73b has an E-shape with a single leg extending in a direction perpendicular to the length direction of the battery module 70 and three further legs extending in the length direction of the battery module 70. The single leg has a length corresponding to the extension of six narrow cell side surfaces 17, 18 and a width corresponding to the extension of a cell terminal 21, 22 in a length direction of the module 70 and thus extends over all rows 78 of the battery module 70. Each of the further legs has a length corresponding to the sum of half the extension of a wide cell side surface 15, 16 in the module's length direction, i.e. the length of a first spacer 74a, and the length of a cell terminal 21, 22 and a width corresponding to the extension of a cell terminal 21, 22 perpendicular to a length direction of the module 70. The further legs are aligned with the second, fourth and sixth row 79, respectively.

The first and second module terminal 71, 72 of the battery module 70 of the third embodiment again comprises a pole section 71a, 72a and a contact section 71b, 72b. The contact section 71b of the first module terminal 71 is a planar rectangular aluminum strip that extends in a direction perpendicular to the module's length direction with a length that corresponds to the extension of five narrow cell side surfaces 17, 18 and connects the negative cell terminals 21 of the outermost cells 80 of the second, fourth and sixth row 78 in parallel, while it extends contactless over the first spacers 74a of the third and fifth row 78.

The contact section 72b of the second module terminal 72 is similar to that of the second embodiment but has a second leg with a length that corresponds to the extension of five narrow cell side surfaces 17, 18 and extends contactless over the outermost cells 80 of the second and fourth row 78 and towards positive terminals 21 of outermost cells 80 of the third and fifth row 78 for electrically connecting first, third and fifth row 78 in parallel. The second leg comprises two semicircular recess configured to be aligned with the vent member 39 of the outermost cells 80 of the second and fourth rows 78 to allow venting of a hot vent-gas jet.

If a failed battery cell 80 of a battery module 70 of one of the first to third embodiment is located in the middle of the battery module 70, then its heat is absorbed by six adjacent cells 80, four of which are part of adjacent rows 78 and connected to the failed cell 80 via wide cell side surfaces 15, 16 and two of which are connected to the failed cell 80 via first busbars 73a. In contrast, if a cell 80 fails in the middle of the conventional module 60 shown in Fig. 3, only two adjacent cells 80 that are each connected through a wide cell side surface 15, 16 and a busbar 63 absorb the heat of the failed cell 80. Hence, in the battery module 70 according to the invention each adjacent battery cell 80 takes only up 1/4 to 1/6 of the heat from the failed cell 80. In contrast, in the conventional module 60 of Fig. 3 each adjacent cells 80 takes up 1/2 of the heat of the failed cell 80. Thus, an adjacent cell 80 less probably enters into thermal runaway in the battery module 70 of the invention compared to a conventional module 60.

If a failed battery cell 80 of a battery module 70 of one of the first to third embodiment is on the edge of the battery module 70, than at least two adjacent cells 80, the first spacer 74a and the second spacer 74b absorb the heat from the thermal runaway reaction. If the failed cell 80 is on the edge of the module 60 of Fig. 3, then only one adjacent cell 80 and the spacer 64 absorb the heat. Again, the heat distribution is more even in the battery module 70.

## Claims

1. A battery module (70), comprising:
a plurality of rows (78) of battery cells (80), each battery cell (80) comprising a prismatic battery case (26) with a bottom surface (14), a first pair of wide side surfaces (15,16) and a second pair of narrow side surfaces (17,18);
a plurality of first busbars (73a) and at least one second busbar (73b), the busbars (73a,73b) being configured for electrically connecting battery cells (80),
wherein adjacent battery cells (80) within a row (78) face each other via their narrow side surfaces (17,18) and adjacent battery cells (80) of adjacent rows (78) face each other via their wide side surfaces (15,16),
wherein adjacent battery cells (80) within a row (78) are electrically connected in series via one of the plurality of first busbars (73a) and distinct rows (78) are electrically connected in series via at least one second busbar (73b), and
wherein the battery cells (80) of adjacent rows (78) are shifted against each other in a direction parallel or antiparallel to a length direction of the battery module (70).

2. The battery module (70) of claim 1, wherein the rows (78) extend in parallel to a length direction of the battery module (70).

3. The battery module (70) of claim 1 or 2, wherein an offset between battery cells (80) of adjacent rows (78) corresponds to half of the extension of a wide cell side surface (15,16) in a length direction of the battery module (70).

4. The battery module (70) according to any one of the preceding claims, wherein an offset between outermost battery cells (80) of adjacent rows (78) is filled with a first spacer (74a).

5. The battery module (70) according to claim 4, wherein each row (78) comprises a first spacer (74a).

6. The battery module (70) according to any one of the preceding claims, wherein the polarities of outermost battery cells (80) of adjacent rows (78) are opposite.

7. The battery module (70) according to any one of the preceding claims, wherein the first busbars (73a) are further configured to electrically connect battery cells (80) of distant rows (78) in parallel.

8. The battery module (70) according to claim 7, wherein the first busbars (73a) each comprise a perforation (79) configured to be aligned with a vent member (39) of a battery cell (80) in between the electrically connected distant rows (78).

9. The battery module (70) according to any one of the preceding claims, wherein the at least one second busbar (73b) is further configured to electrically connect distant rows (78) in parallel.

10. The battery module (70) according to any one of the preceding claims, wherein the battery cells (80) are connected in series and/or in parallel between a first module terminal (71) and a second module terminal (72).

11. The battery module (70) according to claim 9, wherein each of the first and second module terminal (71,72) comprises a pole section (71a,72a) configured to be connected to an external load circuit and a contact section (71b,72b) configured to electrically connect battery cells (80) of distinct rows (78) in parallel.

12. The battery module (70) according to claims 7, 9 and 11, wherein the amount of battery cells (80) electrically connected in parallel by one of the first busbars (73a), the at least one second busbar (73b) and each contact section (71b,72b) of the first and second module terminal (71,72) is equal.

13. The battery module (70) of any one of the preceding claims, comprising a first pair of wide module side surfaces (76) and a second pair of narrow module side surfaces (77), wherein the wide module side surfaces (76) extend in a length direction of the battery module (70).

14. The battery module (70) according to claim 13, comprising a pair of second spacers (74b) aligned with the wide module side surfaces (76) and/or a ribbon (75) extending around the wide and narrow module side surfaces (76,77).

## Patentansprüche

1. Ein Batteriemodul (70), aufweisend:
eine Vielzahl von Zeilen (78) von Batteriezellen (80), wobei jede Batteriezelle (80) ein prismatisches Batteriegehäuse (26) mit einer Bodenfläche (14), einem ersten Paar breiter Seitenflächen (15, 16) und einem zweiten Paar schmaler Seitenflächen (17, 18) aufweist;
eine Vielzahl erster Sammelschienen (73a) und zumindest eine zweite Sammelschiene (73b), wobei die Sammelschienen (73a, 73b) konfiguriert sind, um die Batteriezellen (80) elektrisch zu verbinden,
wobei benachbarte Batteriezellen (80) in einer Zeile (78) über ihre schmalen Seitenflächen (17, 18) einander zugewandt sind und benachbarte Batteriezellen (80) benachbarter Zeilen (78) über ihre breiten Seitenflächen (15, 16) einander zugewandt sind,
wobei benachbarte Batteriezellen (80) in einer Zeile (78) über eine der Vielzahl der ersten Sammelschienen (73a) elektrisch in Reihe geschaltet sind und einzelne Zeilen (78) über zumindest eine zweite Sammelschiene (73b) elektrisch in Reihe geschaltet sind, und
wobei die Batteriezellen (80) benachbarter Zeilen (78) in einer Richtung parallel oder antiparallel zu einer Längsrichtung des Batteriemoduls (70) gegeneinander verschoben sind.

2. Das Batteriemodul (70) nach Anspruch 1, wobei sich die Zeilen (78) parallel zu einer Längsrichtung des Batteriemoduls (70) erstrecken.

3. Das Batteriemodul (70) nach Anspruch 1 oder 2, wobei eine Verschiebung zwischen Batteriezellen (80) benachbarter Zeilen (78) der Hälfte der Erstreckung einer breiten Zellenseitenfläche (15, 16) in einer Längsrichtung des Batteriemoduls (70) entspricht.

4. Das Batteriemodul (70) nach einem der vorhergehenden Ansprüche, wobei eine Verschiebung zwischen äußersten Batteriezellen (80) benachbarter Zeilen (78) mit einem ersten Abstandhalter (74a) gefüllt ist.

5. Das Batteriemodul (70) nach Anspruch 4, wobei jede Zeile (78) einen ersten Abstandhalter (74a) aufweist.

6. Das Batteriemodul (70) nach einem der vorhergehenden Ansprüche, wobei die Polaritäten äußerster Batteriezellen (80) benachbarter Zeilen (78) entgegengesetzt sind.

7. Das Batteriemodul (70) nach einem der vorhergehenden Ansprüche, wobei die ersten Sammelschienen (73a) ferner konfiguriert sind, um Batteriezellen (80) entfernter Zeilen (78) elektrisch parallel zu schalten.

8. Das Batteriemodul (70) nach Anspruch 7, wobei die ersten Sammelschienen (73a) jeweils eine Durchlöcherung (79) aufweisen, die konfiguriert ist, um mit einem Lüftungselement (39) einer Batteriezelle (80) zwischen den elektrisch verbundenen entfernten Zeilen (78) zu fluchten.

9. Das Batteriemodul (70) nach einem der vorhergehenden Ansprüche, wobei die zumindest eine zweite Sammelschiene (73b) ferner konfiguriert ist, um entfernte Zeilen (78) elektrisch parallel zu schalten.

10. Das Batteriemodul (70) nach einem der vorhergehenden Ansprüche, wobei die Batteriezellen (80) zwischen einem ersten Modulanschluss (71) und einem zweiten Modulanschluss (72) in Reihe und/oder parallel geschaltet sind.

11. Das Batteriemodul (70) nach Anspruch 9, wobei jeder des ersten und zweiten Modulanschlusses (71, 72) einen Polabschnitt (71a, 72a), der konfiguriert ist, um mit einer externen Lastschaltung verbunden zu sein, und einen Kontaktabschnitt (71b, 72b), der konfiguriert ist, um Batteriezellen (80) einzelner Zeilen (78) elektrisch parallel zu schalten, aufweist.

12. Das Batteriemodul (70) nach den Ansprüchen 7, 9, und 11, wobei die Menge der Batteriezellen (80), die durch eine der ersten Sammelschienen (73a), die zumindest eine zweite Sammelschiene (73b) und jeden Kontaktabschnitt (71b, 72b) des ersten und zweiten Modulanschlusses (71, 72) elektrisch parallel geschaltet sind, gleich ist.

13. Das Batteriemodul (70) nach einem der vorhergehenden Ansprüche, aufweisend ein erstes Paar breiter Modulseitenflächen (76) und ein zweites Paar schmaler Modulseitenflächen (77), wobei sich die breiten Modulseitenflächen (76) in eine Längsrichtung des Batteriemoduls (70) erstrecken.

14. Das Batteriemodul (70) nach Anspruch 13, aufweisend ein Paar zweiter Abstandhalter (74b), die mit den breiten Modulseitenflächen (76) fluchten, und/oder ein Band (75), das um die breiten und schmalen Modulseitenflächen (76, 77) herum verläuft.

## Revendications

1. Module de batterie (70) comprenant :
une pluralité de rangées (78) d'éléments de batterie (80), chaque élément de batterie (80) comprenant un boîtier de batterie prismatique (26) avec une surface inférieure (14), une première paire de surfaces latérales larges (15, 16) et une seconde paire de surfaces latérales étroites (17, 18) ;
une pluralité de premières barres omnibus (73a) et au moins une seconde barre omnibus (73b), les barres omnibus (73a, 73b) étant configurées pour raccorder électriquement les éléments de batterie (80),
dans lequel les éléments de batterie (80) adjacents à l'intérieur d'une rangée (78) se font face via leurs surfaces latérales étroites (17, 18) et les éléments de batterie (80) adjacents des rangées (78) adjacentes se font face via leurs surfaces latérales larges (15, 16),
dans lequel les éléments de batterie (80) adjacents à l'intérieur d'une rangée (78) sont raccordés électriquement en série via l'une de la pluralité de premières barres omnibus (73a) et les rangées (78) distinctes sont électriquement raccordées en série via au moins une seconde barre omnibus (73b), et
dans lequel les éléments de batterie (80) des rangées (78) adjacentes sont décalés les uns par rapport aux autres dans une direction parallèle ou antiparallèle à une direction de longueur du module de batterie (70).

2. Module de batterie (70) selon la revendication 1, dans lequel les rangées (78) s'étendent en parallèle à une direction de longueur du module de batterie (70).

3. Module de batterie (70) selon la revendication 1 ou 2, dans lequel un décalage entre les éléments de batterie (80) des rangées (78) adjacentes correspond à la moitié de l'extension d'une surface latérale d'élément large (15, 16) dans une direction de longueur du module de batterie (70).

4. Module de batterie (70) selon l'une quelconque des revendications précédentes, dans lequel un décalage entre les éléments de batterie (80) situés le plus à l'extérieur des rangées (78) adjacentes est rempli avec un premier dispositif d'espacement (74a).

5. Module de batterie (70) selon la revendication 4, dans lequel chaque rangée (78) comprend un premier dispositif d'espacement (74a).

6. Module de batterie (70) selon l'une quelconque des revendications précédentes, dans lequel les polarités des éléments de batterie (80) situés le plus à l'extérieur des rangées (70) adjacentes sont opposées.

7. Module de batterie (70) selon l'une quelconque des revendications précédentes, dans lequel les premières barres omnibus (73a) sont en outre configurées pour raccorder électriquement les éléments de batterie (80) des rangées (78) distantes en parallèle.

8. Module de batterie (70) selon la revendication 7, dans lequel les premières barres omnibus (73a) comprennent chacune une perforation (79) configurée pour être alignée avec un élément d'évent (39) d'un élément de batterie (80) entre les rangées (78) distantes électriquement raccordées.

9. Module de batterie (70) selon l'une quelconque des revendications précédentes, dans lequel l'au moins une seconde barre omnibus (73b) est en outre configurée pour raccorder électriquement les rangées (78) distantes en parallèle.

10. Module de batterie (70) selon l'une quelconque des revendications précédentes, dans lequel les éléments de batterie (80) sont raccordés en série et/ou en parallèle entre une première borne de module (71) et une seconde borne de module (72).

11. Module de batterie (70) selon la revendication 9, dans lequel chacune des première et seconde bornes de module (71, 72) comprend une section polaire (71a, 72a) configurée pour être raccordée à un circuit de charge externe et une section de contact (71b, 72b) configurée pour raccorder électriquement les éléments de batterie (80) des rangées (78) distinctes en parallèle.

12. Module de batterie (70) selon les revendications 7, 9 et 11, dans lequel la quantité d'éléments de batterie (80) électriquement raccordés en parallèle par l'une des premières barres omnibus (73a), l'au moins une seconde barre omnibus (73b) et chaque section de contact (71b, 72b) des première et seconde bornes de module (71, 72) est identique.

13. Module de batterie (70) selon l'une quelconque des revendications précédentes, comprenant une première paire de surfaces latérales de module larges (76) et une seconde paire de surfaces latérales de module étroites (77), dans lequel les surfaces latérales de module larges (76) s'étendent dans la direction de longueur du module de batterie (70).

14. Module de batterie (70) selon la revendication 13, comprenant une paire de seconds dispositifs d'espacement (74b) alignés avec les surfaces latérales de module larges (76) et/ou un ruban (75) s'étendant autour des surfaces latérales de module larges et étroites (76, 77).
